(19) Europäisches Patentamt / European Patent Office / Office européen des brevets

(11) **EP 4 229 004 B1**

(12) **EUROPEAN PATENT SPECIFICATION**

(45) Date of publication and mention
of the grant of the patent:
**16.04.2025  Bulletin 2025/16**

(21) Application number: **21782570.2**

(22) Date of filing: **30.09.2021**

(51) International Patent Classification (IPC):
*C01B 32/198* (2017.01)    *C02F 1/00* (2023.01)
*C02F 1/461* (2023.01)    *C02F 1/467* (2023.01)
*C02F 101/36* (2006.01)

(52) Cooperative Patent Classification (CPC):
**C01B 32/198; C02F 1/46109; C02F 1/4672;**
C02F 2001/46133; C02F 2001/46138;
C02F 2001/46161; C02F 2101/36; C02F 2201/4614;
C02F 2201/46145

(86) International application number:
**PCT/EP2021/076930**

(87) International publication number:
**WO 2022/069621 (07.04.2022 Gazette 2022/14)**

(54) **METHOD TO PREPARE A GRAPHENE COATED SPONGE-BASED ELECTRODE, ELECTRODE OBTAINED THEREOF AND USE OF THE ELECTRODE FOR WATER TREATMENT**

VERFAHREN ZUR HERSTELLUNG EINER GRAPHENBESCHICHTETEN ELEKTRODE AUF SCHWAMMBASIS, DARAUS HERGESTELLTE ELEKTRODE UND VERWENDUNG DER ELEKTRODE ZUR WASSERAUFBEREITUNG

PROCEDE DE PREPARATION D'UNE ELECTRODE A BASE D'EPONGES REVETUES DE GRAPHENE, ELECTRODE OBTENUE ET UTILISATION DE L'ELECTRODE POUR LE TRAITEMENT DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **02.10.2020  EP 20382879**

(43) Date of publication of application:
**23.08.2023  Bulletin 2023/34**

(73) Proprietors:
• **Institució Catalana De Recerca I Estudis Avançats (ICREA)**
  **08010 Barcelona (ES)**
• **Fundació Institut Catala de Recerca de l'Aigua (ICRA)**
  **17003 Girona (ES)**

(72) Inventors:
• **RADJENOVIC, Jelena**
  **17003 Girona (ES)**

• **BAPTISTA PIRES, Luis Miguel**
  **17003 Girona (ES)**
• **NORRA, Giannis-Florjan**
  **17003 Girona (ES)**
• **DUINSLAEGER, Nick**
  **17003 Girona (ES)**

(74) Representative: **Torner, Juncosa I Associats, SL**
  **C / Pau Claris, 108, 1r 1a**
  **08009 Barcelona (ES)**

(56) References cited:
**WO-A1-2019/238119**

• **ZHANG YI FEI ET AL: "Adsorption of Dye in Media Industry Pollution with Glass Wool Modified by Graphite Oxide", vol. 448-453, 1 October 2013 (2013-10-01), pages 119 - 122, XP055787444, ISSN: 1660-9336, Retrieved from the Internet <URL:http://dx.doi.org/10.4028/www.scientific.net/AMM.448-453.119> DOI: 10.4028/www.scientific.net/AMM.448-453.119**

## Description

### TECHNICAL FIELD

The present disclosure relates to a method to prepare a graphene coated sponge-based electrode and to an electrode obtained by said method. It further relates to an electrochemical cell comprising such an electrode and to the use of the graphene coated sponge-based electrode for water treatment.

### BACKGROUND ART

Recently, three-dimensional (3D) graphene-based macrostructures have been developed as electrodes for supercapacitors, batteries, and sensors due to their high specific area, exceptional mechanical properties, and versatile surface chemistry. One of the greatest advantages of graphene-based materials is the possibility to fine-tune their electrical (e.g., conductivity, electrocatalytic activity), physico-chemical (e.g., hydrophobicity, surface roughness) and mechanical properties (e.g., porosity, flexibility) by setting the degree of graphene oxide (GO) reduction and introducing defects and dopants into the graphene network. There exists a plethora of 3D graphene macrostructure production methodologies but stands out the use of mineral wool (MW), a porous template with high temperature stability (up to 1000°C), which enables easy synthesis of graphene sponges at elevated temperatures and pressures. MW has good dimensional stability, maintaining the open pore structure after the synthesis, and is compressible, thus enabling easy application in various reactor geometries. Industrial activities produce large amounts of waste MW that is largely dumped. Reusing this waste MW not only enables low cost synthesis of graphene coated sponges but is also a step towards circular economy. 3D graphene macrostructures and membranes have been used in several applications.

GE, J. et al. "Joule-heated graphene-wrapped sponge enables fast clean-up of viscous crude-oil spill" Nature Nanotechnology, 12, pages 434-440 (2017) discloses the use of a Joule-heated graphene-wrapped sponge to clean-up viscous crude oil at high sorption speed, thereby reducing *in situ* the viscosity of the crude oil, which prominently increased the oil-diffusion coefficient in the pores of the sponge and thus speeding up the oil-sorption rate.

US 2013/0230709 A1 discloses a method for preparing a porous graphene material comprising the following steps: mixing graphene or graphene oxide with pore-forming agent and pressing to obtain bulk or powder particle composite; heating the composite and releasing gases form the pore-forming agent. Such porous graphene material can be used as electrode materials of supercapacitor and lithium ion battery.

US 2016/0257569 A1 discloses a method that includes contacting at least one elemental metal with a composition having graphene oxide under conditions sufficient to reduce at least a portion of the graphene oxide to graphene.

US 9499410 B2 discloses a method of making a metal oxide-graphene composite that can include, for instance, providing a composition including graphene oxide and at last one elemental metal dispersed in a liquid medium, and heating the composition in a sealed chamber at a temperature above a nominal boiling point of the liquid medium to from the metal oxide-graphene composite.

CN108947275 discloses a graphene oxide modified water repellent as well as a preparation method and application of the graphene oxide modified water repellent. The preparation method includes directly spraying the graphene oxide-containing composition on rock wool fibers.

CN108924974 discloses an electric heating material for heavy oil recovery in which graphene is modified on rock wool and the modified rock wool is put into a heating steel pipe as a heating core.

ZHANG Y. F. et al. "Adsorption of Dye in Media Industry Pollution with Glass Wool Modified by Graphite Oxide" Applied Mechanics and Materials, vol. 448-453, pages 119-122 (2013) discloses a glass wool modified by graphite oxide in order to remove dyes in media industry.

WO2019238119A1 discloses devices and methods related to a graphene oxide-based membrane directed to water treatment and purification.

Electrochemical systems are a very good candidate to become platform technology for decentralized water and wastewater treatment as they do not chemical reagents, do not form a residual waste stream, operate at ambient temperature and pressure, are robust, versatile and have a small footprint. They offer the most direct approach to translate the energy input into contaminant degradation by a simple application of an electric potential/current, which leads to oxidation/reduction of organic contaminants directly through charge transfer at the electrode surface, and indirectly via electrochemically generated oxidant species. However, evolution of electrochemical treatment from laboratory-scale to real-world application faces two major bottlenecks: 1) high energy consumption and thus high operational cost of the treatment using conventional flow-by, two dimensional (2D) systems due to the pronounced mass transfer limitations for low ng-$\mu$g/L concentrations of contaminants in water, and 2) formation of toxic halogenated organic and inorganic byproducts in the presence of halide ions, which occurs to varying degrees to all electrode materials reported to date.

One of the main drawbacks of all currently available anode materials is rapid oxidation of chloride to chlorine

(Cl$_2$), which dissolves to a long-lived oxidant, hypochlorous acid/hypochlorite (HOCl, OCl$^-$), and reacts with organic matter to form toxic and persistent chlorinated byproducts. In the case of highly oxidizing anodes (e.g., boron-doped diamond (BDD), Ti$_4$O$_7$), chloride can be further oxidized to form toxic chlorate (ClO$_3$$^-$) and perchlorate (ClO$_4$$^-$). Given that chloride is present in virtually all contaminated water, formation of chlorinated byproducts represents a major challenge for safe application of electrochemical water treatment systems.

In addition, electrochemical oxidation can remove per- and polyfluoroalkyl substances (PFASs) from water. Yet, the energy consumption for complete removal of PFASs is unacceptably high (>30 kWh/m3), and more importantly, the electrodes capable of their removal, boron doped diamond (BDD) anodes have excessive cost (~6,000€/m2). PFASs are resistant towards most oxidants and reductants applied in advanced water and wastewater treatment due to the strength of C-F bonds and the high electronegativity of fluorine. PFAS have a demonstrated specific toxicity to the immune system and may cause cancer, liver damage, and hormone disruption.

## SUMMARY OF THE INVENTION

In order to address one or more of the foregoing problems, one aspect of the present invention provides a method to prepare a graphene coated sponge-based electrode comprising: obtaining a graphene coated sponge by: filling mineral wool with a solution comprising graphene material by successive squeezing to obtain a mineral wool soaked with graphene material; transferring the mineral wool soaked with graphene material into a hydrothermal reactor and submitting it to heating from 60 to 240 °C for 5 minutes to 72 hours to have graphene material bonded to mineral wool; and cleaning the heated material to remove the unbonded graphene material and reaction by-products from the graphene coated mineral wool; and connecting the graphene coated sponge to electrical current.

The present invention also relates to an electrochemical flow-through reactor comprising the graphene coated sponge electrodes as described herein.

Furthermore, the present invention describes a method of treating water comprising passing the water through the electrochemical flow-through reactor described herein.

The present invention also relates to the use of the electrode as described herein as a water treating-agent.

## BRIEF DESCRIPTION OF THE DRAWINGS

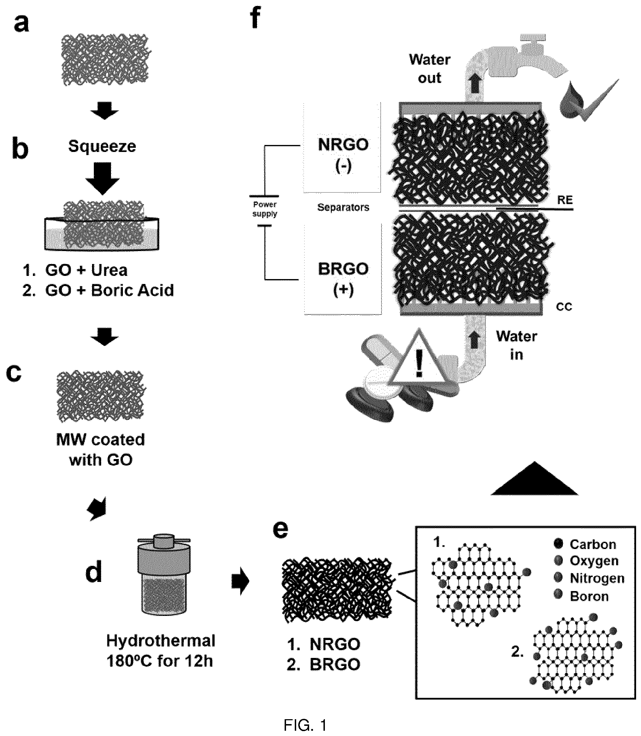

FIG. 1 a-e depicts a graphical representation of the methodology for the production of graphene coated sponge based on a hydrothermal reaction of graphene oxide (GO) dispersion and FIG. 1 f depicts a graphical representation of an electrochemical flow-through water treatment system.

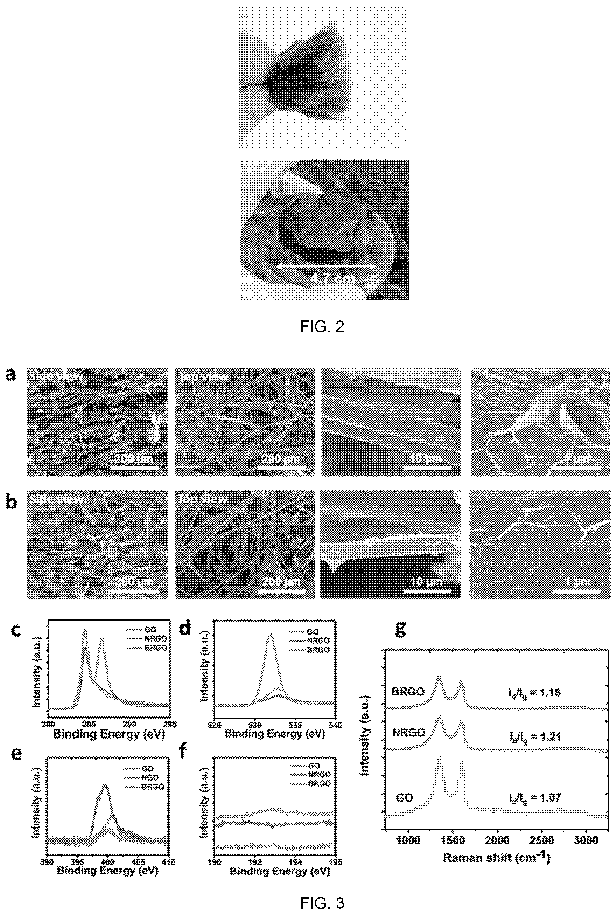

FIG. 2 shows images of mineral wool (MW) and a graphene coated sponge.

FIG. 3 depicts the scanning electron microscope images of a) boron-doped graphene oxide (BRGO) sponge and b) nitrogen-doped reduced graphene oxide (NRGO) sponge. FIG.3 also depicts the X-ray photoelectron spectroscopy (XPS) spectra of GO, BRGO and NRGO of c) carbon, d) oxygen, e) nitrogen and f) boron. FIG. 3 g) depicts the Raman spectroscopy profiles of GO, BRGO and NRGO.

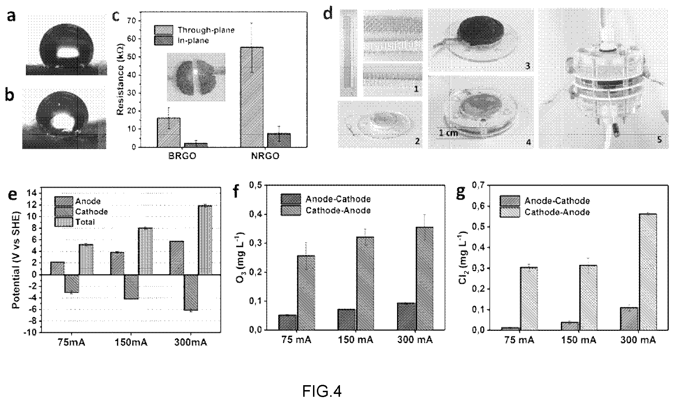

FIG. 4 depicts the contact angle measurement of a) BRGO and b) NRGO, c) through-plane and in-plane resistance of BRGO and NRGO sponges (inset: lightning a LED using graphene sponge as a connector), d) methodology for building the flow-through electrochemical filter, e) anode, cathode and total cell potential at different applied currents for BRGO-NRGO electrochemical filter, generation of oxidant species in BRGO-NRGO electrochemical filter at different applied currents and flow directions f) O$_3$ and g) Cl$_2$ formed in the presence of 20 mM NaCl.

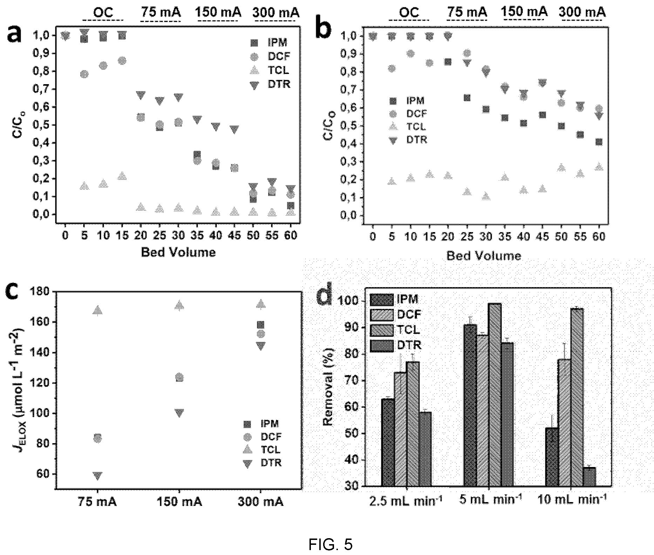

FIG. 5 illustrates the electrochemical removal of persistent organic contaminants using graphene coated sponge electrodes in anode-cathode flow direction: feed concentrations (C) of target contaminants normalized to permeate concentrations (C$_0$) in the open circuit (OC) and at different anodic currents and constant flow rate of 5 mL/min in a) anode-cathode and b) cathode-anode directions; c) electrooxidation fluxes (JELOX) of target contaminants obtained at different anodic currents and constant flow rate of 5 mL/min, d) removal (%) vs flow rate at 300 mA of applied current.

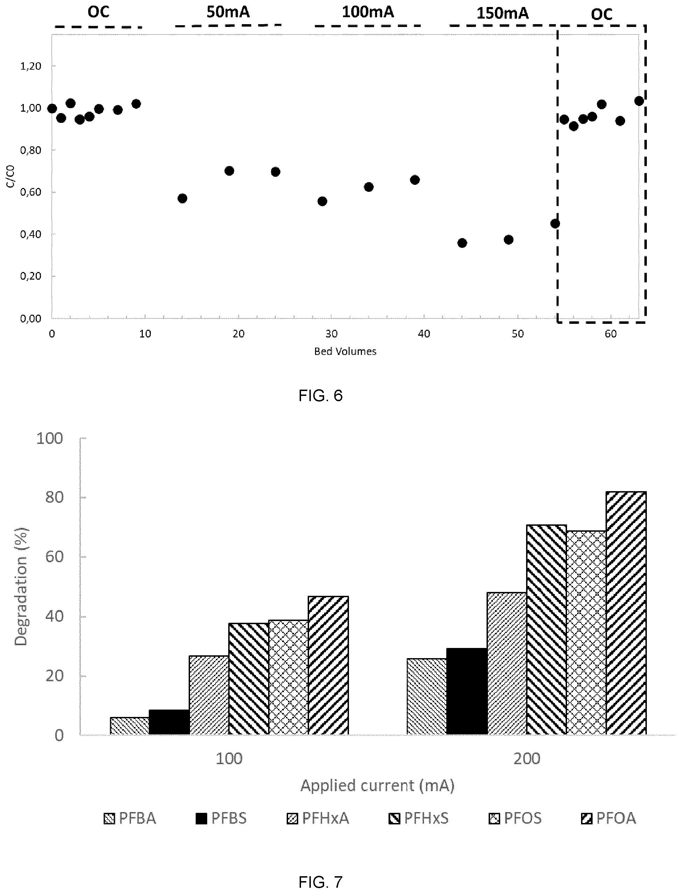

FIG. 6 illustrates the removal of PFOS at 2 $\mu$M initial concentration in tap water (conductivity 0.4 mS/cm).

FIG. 7 illustrates the removal of PFOS, PFOA, perfluorohexane sulfonate (PFHxS), perfluorohexanoic acid (PFHxA), perfluorobutane sulfonate (PFBS), perfluorobutanoic acid (PFBA) at 0.2 $\mu$M initial concentration in 10 mM buffer (pH 7.2, 1.2 mS/cm).

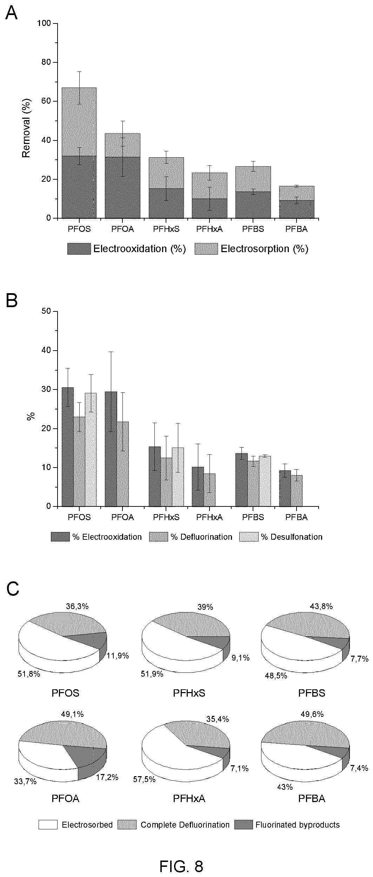

FIG. 8 illustrates the removal efficiency of the target PFASs represented as A) sum of removal due to electrooxidation and electrosorption, B) electrooxidation, defluorination and desulfonation (where applicable) efficiency of the target PFASs, and C) distribution of different removal mechanisms in the overall removal of each PFAS. The experiments were conducted at 230 A·m$^{-2}$ and 2 $\mu$M initial concentration of each compound.

## DETAILED DESCRIPTION OF THE INVENTION

Unless otherwise indicated, all percentages relating to the content of a component or to a collection of components of the composition of the present invention refer to the weight percentage with respect to the total volume of the composition.

As described hereinabove, the present invention relates to a method to prepare a graphene coated sponge-based electrode comprising: obtaining a graphene coated sponge by filling mineral wool with a solution comprising graphene material by successive squeezing to obtain a mineral wool soaked with graphene material; transferring the mineral wool soaked with graphene material into a hydrothermal reactor and submitting it to heating from 60 to 240°C for 5 minutes to 72 hours to have graphene material bonded to mineral wool; and cleaning the heated material to remove the unbonded graphene material and reaction by-products from the graphene coated mineral wool; and connecting the graphene coated sponge to electrical current.

In the present invention, the graphene material is typically selected from the group consisting of graphene, graphene oxide, reduced graphene oxide, pristine graphene, polycrystalline graphene, and graphene quantum dots.

A further aspect of the invention relates to a method to prepare a graphene coated sponge-based electrode wherein the graphene material is graphene oxide.

A hydrothermal reactor according to the present invention may be an autoclave.

Optionally, the method to prepare a graphene coated sponge-based electrode may include a further freeze-drying step of the graphene coated sponge after the cleaning step.

The cleaning step in the method according to the present invention may be carried out in a water-based bath or in a flow-through reactor.

The heated material resulting from the transferring and heating step according to the present invention might be cleaned in a water-based bath for a time between 1 minute and 72 hours at a temperature from 30 to 200°C.

Preferably, the time may be from 10 minutes to 48 hours, more preferably from 1 hour to 24 hours, even more preferably from 6 hours to 18 hours.

Preferably, the temperature of the water-based bath may be from 40 to 200 °C, more preferably from 60 to 200°C, more preferably from 100 to 200°C, even more preferably from 150 to 200°C.

The method according to the present invention may further comprise a solution comprising the graphene material method including a dopant.

Dopants, or doping agents, are traces of impurity elements introduced into a chemical material to alter its original electrical or optical properties. The amount of dopant necessary to cause changes is typically very low. Dopants introduce defects in the structure of the chemical material favoring ion diffusion.

In the present invention, dopants are preferably selected from the group consisting of boric acid, urea, metal precursors and 2D materials.

The metal precursors according to the present invention are, preferably, metallic chlorides, and more preferably, selected from the group consisting of tin chloride (II) (SnCl$_2$), iron chloride (II) (FeCl$_2$), titanium chloride (IV) (TiCl$_4$) and mixtures thereof.

The 2D materials according to the present invention are preferably selected from the group consisting of hexagonal boron nitride, phosphorene, borophene, graphydine, molybdenum disulfide (MoS$_2$) and mixtures thereof.

Doping the graphene with nitrogen-containing compounds (such as urea) might be applied to enhance the production of hydrogen peroxide (H$_2$O$_2$) at the cathode and activation of hydroxyl radicals (OH•).

In addition, doping of carbon-based materials with boron enhances the generation of ozone (O$_3$), and might be employed in the present invention to enhance the electrocatalytic activity of graphene sponge anodes.

The method according to the present invention involves a solution comprising graphene material in a concentration between 0.001 and 10g/L of graphene material per liquid base, preferably between 0.01 and 10 g/L, preferably between 0.1 and 10 g/L, more preferably between 1 and 8 g/L, more preferably between 2 and 6 g/L, even more preferably between 3 and 5 g/L.

The present invention also describes a graphene coated sponge obtained by the method described herein.

The graphene coated sponge is flexible and easily shaped when wet, and can be produced in different geometries, scrolled, bended and/or compressed.

The method according to the present invention may further include metallic current feeders configured to connect the graphene coated sponge to electrical current. Preferably, the metallic current feeders are selected from the group comprising stainless steel, titanium and tantalum.

The graphene coated sponge may be connected to either a direct current (DC) or an alternate current (AC) power source and may be employed as electrodes for electrochemical degradation of persistent pollutants.

The present invention also describes a graphene coated sponge-based electrode obtained by the method described herein.

Moreover, the present invention also discloses that the electrode obtained by the method described herein may further include metallic current feeders configured to connect the graphene coated sponge to electrical current. Preferably, the metallic current feeders are selected from the group comprising stainless steel, titanium, niobium, and tantalum.

The present invention also discloses an electrochemical flow-through reactor comprising at least an anode and a cathode wherein at least one of the electrodes is the graphene coated sponge-based electrode described herein. The flow-through reactor according to the present invention preferably includes one cathode and one anode wherein both of the electrodes are the graphene coated sponge-based electrodes described herein. Moreover, the electrochemical flow-through reactor may comprise more than one anode and more than one cathode, at least one of them being the graphene coated sponge-based electrode of the invention.

Since the graphene coated sponge is flexible, this material is very well suited to be applied in varying reactor geometries. The reactors of the present invention might be of different geometries, for instance planar or circular.

Furthermore, the present invention also discloses a reactor having multiple anodes and multiple cathodes, wherein at least one of the electrodes is made of the graphene coated sponge. Other reactors comprising the graphene coated sponge electrodes are disclosed herein.

The electrochemical reactor may include one graphene coated sponge electrode designed as a simple filter, but other possibilities are envisaged. The electrochemical reactor may be a column-type reactor or a Swiss roll reactor -analogous to a reverse osmosis module.

The present invention further discloses a method of treating water comprising passing the water through the electrochemical flow-trough reactor described herein. Water purification may preferably involve the electrochemical degradation of persistent pollutants in a flow-through, single pass mode electrochemical filter as described herein.

The water treated by the electrochemical reactor according to the present invention might be of low conductivity, such as tap water. Typically, the present invention allows treating water presenting a conductivity of 0.4 mS/cm or more, preferably 0.7 mS/cm or more, preferably 1.2 mS/cm or more.

The conductivity of the electrolyte has a significant impact on the performance of highly porous electrodes, because the ohmic potential drop in electrode pores can result in only a fraction of the total surface are being electroactive for compound oxidation. Most of the groundwater, surface water and even municipal wastewater effluents are low conductivity solutions (i.e. <2 mS/cm). Thus, it is of crucial significance that our present invention can perform well using low conductivity solutions, in particular when working with a porous electrode material such as the disclosed graphene coated sponges.

The present invention further discloses the use of the electrode as described herein as a water-treating agent. Specifically, the present invention discloses the use of the electrode as described herein for electrochemical water treatment.

Graphene sponges according to the present invention surprisingly do not produce any chlorate, perchlorate and barely any $Cl_2$ (current efficiency for $Cl_2$ production is only 0.04 % in the presence of 20 mM chloride). These results stand in stark contrast with the performance of not only commercial electrode materials, but also novel porous electrodes such as $Ti_4O_7$ and carbon nanotube (CNT)-based electrochemical membranes. It shows that graphene coated sponge electrodes developed in this invention hold great promise for electrochemical water treatment, as one of the major bottlenecks of electrochemical technology -increase in treated effluent toxicity due to the formation of toxic byproducts, is completely avoided.

Efficient removal of model persistent organic contaminants (e.g., iodinated contrast media diatrizoate (DTR) and iopromide (IPM), antibacterial agent triclosan (TCL), anti-inflammatory drug diclofenac (DCF)) and PFOA and PFOS from low conductivity solution (1.2 mS/cm) was obtained, thus demonstrating good performance of the system when working under realistic conditions of water treatment. Partial removal of shorter-chain PFASs was also observed, which can be difficult to be removed even by other electrochemical systems. Given the modularity of the electrochemical filter according to the present invention, complete removal of short-chain PFASs can be achieved by using several graphene sponge electrochemical filters in series. In addition, the synthesis of graphene sponges is low cost, easily scalable and allows easy introduction of dopants (atomic dopants, 2D materials, etc.).

The present application thus shows the elimination of a set of persistent organic contaminants whose main mechanisms of degradation are based on hydroxyl radicals, and the elimination of PFASs that can only be degraded via direct electron transfer. By using the graphene sponges described herein there is no production of chlorine, chlorate and perchlorate. Furthermore, B-doped graphene sponge anode can form ozone in situ. All this was demonstrated under realistic conditions of water treatment (i.e., low initial concentration of target pollutants and low conductivity supporting electrolyte), and the same performance when working with real tap water was also observed.

**EXAMPLES**

The following examples are provided with the intent of further illustrating the present invention but should in no case be interpreted as to be limiting of the present invention.

Example 1: Synthesis of graphene coated sponges

Graphene coated sponges were prepared using cheap mineral wool (MW) as a template. Three different graphene oxide solutions were prepared: i) 70mL of 4 g/L GO solution for the production of RGO sponge, ii) 6 g of boric acid dissolved in 70mL of 4 g/L GO solution for the production of BRGO sponge, iii) 42 g of urea dissolved in 70mL of 4 g/L GO solution for the production of NRGO sponge. A schematic illustration of the protocol followed to synthesize graphene coated sponges is illustrated in FIG. 1. MW (FIG. 1a) is filled with a GO-based solution (4 g/L) by successive squeezing (FIG. 1b). Then, MW soaked with GO (FIG. 1c) is transferred into a hydrothermal reactor and treated for 180°C for 12 h. The resulting material (FIG. 1e) was placed in a water bath for two days to remove the un-bonded graphene sheets and added reagents (the remaining impurities).

This synthesis method enabled to introduce dopants into the graphene macrostructure such as boron and nitrogen by a simple addition of boric acid (for BRGO) and urea (for NRGO) respectively, to the initial GO solution (FIG. 1b and 1e). BRGO and NGO sponges were employed as electrodes for electrochemical degradation of persistent pollutants in electrochemical reactor in flow-through, single pass mode, as represented in FIG. 1f. From FIG. 2 it can be observed how the hydrothermal reaction and coating of MW with graphene cause shrinking and compression of the MW template.

Example 2: Graphene sponge characterization

Graphene coated sponges were characterized by scanning electron microscopy (SEM), performed on a FEI Quanta FEG (pressure: 70 Pa; HV: 20 kV; sport: four). SEM analyses of the synthesized graphene coated sponges confirmed the presence of graphene coating and formation of a 3D porous structure supported by MW yarn skeleton (FIG. 3 a, b). From the side view SEM image, horizontally aligned stacked graphene walls can be observed, which is consistent with the initial macrostructure of MW (FIG. 1g).

The graphene sponge was also characterized by Raman, using a dispersive spectrometer Jobin-Yvon LabRam HR 800, coupled to an optical microscope Olympus BXFM. The CCD detector was cooled at -70$^{OCV}$ and a 532 nm laser line was used with a dispersive grating of 600 lines/mm and a laser power at sample of 0.5 mW. The level of defects was measured using Raman spectroscopy (FIG. 3g) and was calculated by measuring the intensity ratio of D peak at 1347 cm$^{-1}$ ($I_d$) and a G peak at 1581 cm$^{-1}$ ($I_g$). A ratio of zero means no defects at all, and a higher ratio means higher defect content in the graphene coated sponge resulting from the reduction procedure. An $I_d/I_g$ ratio of 1.04 for GO, 1.18 for BRGO and 1.21 for NRGO was determined. Higher $I_d/I_g$ ratio for BRGO and NRGO sponge is a result of the reduction of GO and indicates a defect-rich structure, which facilitates the contact between the electrode and the electrolyte, acting as an electrocatalytic active site and favouring ion diffusion.

X-ray diffraction (XRD) data was acquired with an X'pert multipurpose diffractometer at room temperature using a CuK$\alpha$ radiation (I=1.540 Å). This has a vertical $\theta$-$\theta$ goniometer (240 mm radius), where the sample stages are fixed and do not rotate around the $\Omega$ axis in $\Omega$-2$\theta$ diffractometers. The detector used is an X-Celerator, that is, an ultrafast X-ray detector based on real time multiple strip technology. The diffraction pattern was recorded between 4° and 30° using a step size of 0.03° and a time per step of 1,000 s.

XRD analysis showed a decrease in the interlayer spacing from 8.1 A for GO to ~3.5A for BRGO and NRGO as a consequence of the removal of oxygen functional groups from the basal plane. The XRD analysis also confirmed the absence of any trace metals in the initial MW and produced graphene coated sponges, thus excluding any possible interference in the (electro)catalysis.

X-ray photoelectron spectroscopy (XPS) measurements were done with a Phoibos 150 analyzer (SPECS GmbH, Berlin, Germany) in ultra-high vacuum conditions (base pressure 1-10 mbar) with a monochromatic aluminum K$\alpha$ x-ray source (1486.74 eV). The energy resolution as measured by the full width at half-maximum intensity (FWHM) of the Ag 3d5/2 peak for a sputtered silver foil was 0.58 eV.

According to XPS (FIG. 2c-f), the initial GO material has a C/O atomic ratio of 1.70, while for BRGO and NRGO a respectively C/O atomic ratio of 3.46 and 4.80 was measured probing the efficiency of reduction, as shown in the following table (Table 1):

Table 1. XPS atomic content of GO precursor solution and synthesized graphene sponges

|  | GO | RGO | NRGO | BRGO |
|---|---|---|---|---|
| C (%) | 62.6 | 70.3 | 77.3 | 75.6 |
| O (%) | 36.9 | 28 | 16.1 | 21.8 |
| N (%) | 0.9 | 1.7 | 6.4 | 1.2 |
| B (%) | 0 | 0 | 0 | 1.3 |

NRGO has a successful incorporation of 6.4% of atomic nitrogen (FIG. 3e), while for BRGO the measured content of atomic boron was 1.3% (FIG. 3f).

Apart from NRGO, all synthesized graphene-based materials contained around 1% of nitrogen atom originated from impurities in the commercial GO solution employed and not as a result of the reduction methodology. Thus, BRGO can also be considered a co-doped graphene sponge, with B and N atomic functionalization in its structure, although the term BRGO is maintained for simplicity.

The Brunauer-Emmett-Teller (BET) specific surface area and pore size distribution were determined by N2 adsorption-desorption at 77 K (ASAP 2420, Micromeritics). BET surface areas determined were 0.81 $m^2$/g for MW, 1.39 $m^2$/g for BRGO and 1.44 $m^2$/g for NRGO. BET surface area of MW template is similar to previously reported values for glass and rock wool, that are typically below 1 m2/g. Increase in specific surface are in graphene coated sponges relative to MW template can be assigned to the wrinkled structure of graphene nanosheets.

The interaction of a water droplet with the BRGO and NRGO sponges is represented in FIG. 4 a) and b), respectively. The contact angle determined for BRGO was 139.67°±4.50°, and for NRGO it was 137.67°±7.50°, demonstrating the high degree of hydrophobicity of the graphene coated sponges. These experiments were performed in 3 different layers (1x outer and 2x inner surfaces) of the different graphene sponges ensuring the consistency of this behavior.

The cross-plane resistances of the graphene coated sponges were determined in a 0.5x0.5x0.5 cm cube -x, y, z directions- between two geometric opposite faces (FIG. 4c). Through-plane resistances for BRGO and NRGO were measured to be 16.05±5.82 kΩ and 55.33±13.65 kΩ, whereas the in-plane resistances were of 2.26±1.48 kΩ and 7.48 ±4.01 kΩ, respectively. Higher through-plane than in-plane resistance is a consequence of the fiber direction in the structure of MW, with less fibers connecting the parallel sheets of MW and thus less graphene deposited between these sheets (FIG. 1g). The conductivity of the graphene coated sponges I illustrated by lighting a LED lamp (inset FIG. 4c).

Example 3: Electrochemical performance of graphene coated sponge electrodes

Graphene coated sponges were fed with current using a 3D stainless steel current collector with spiral geometric design (FIG. 4d) to ensure a homogeneous distribution of current over x-y axis of the sponge and avoid its compression. Graphene coated sponges with inserted current collector were placed in a 3D electrochemical flow-through cylindrical reactor, made of methacrylate. The reactor equipped with the BRGO anode and NRGO cathode was operated in flow-through, one pass mode, using a 10 mM phosphate buffer (pH 7.2, 1.2 mS/cm).

Electrochemical system was operated at 75 mA, 150 mA and 300 mA of applied anodic current (i.e., current densities calculated using the projected anode surface area of 43.25, 86.50 and 173 A/$m^2$, respectively) during at least 8 h per each current. There was no visual or electrical degradation of any of the graphene sponges, and the recorded anodic potentials were 2.1±0.06, 3.8±0.1 and 5.7±0.02 V/SHE (vs Standard Hydrogen Electrode) for 75, 150 and 300 mA, respectively for three repetitions (FIG. 4e). The pH remained constant at pH 7 in all experiments -the anodic production of H+ was likely compensated by the cathodic production of OH-, eliminating the need for pH correction of the treated water.

To investigate the production of oxidant species typically observed in electrochemical systems, measurements of hydrogen peroxide ($H_2O_2$), ozone ($O_3$) and, in the presence of 20 mM NaCl, chlorine ($Cl_2$), were performed. The placement of the electrodes has a determining impact on the electrogeneration of oxidants. For example, $O_3$ and $Cl_2$ generated at the anode can be easily reduced at the subsequent cathode in the anode-cathode flow direction. Electrogeneration of peroxide may be enhanced in the anode-cathode configuration due to the reduction of anodically generated $O_2$ at the cathode, although the accumulation of bubbles may hinder the effective $O_2$ mass transfer. Thus, we investigated the formation of the above-mentioned oxidants in anode-cathode and cathode-anode reactor configurations at different applied currents. As shown in FIG. 4f, when applying 75 mA in the anode-cathode direction the measured concentration of $O_3$ was 0.05±0.002 mg/L, whereas when the placement of electrodes was reversed, $O_3$ concentration was 0.3±0.05 mg/L (current efficiency 0.13%). Further increase in the applied current enhanced the generation of O3, and at 300 mA the concentrations of $O_3$ measured were 0.09±0.003 mg/L in the anode-cathode configuration, and 0.4±0.04 mg/L for the cathode-anode direction. These results confirmed: i) electrogeneration of $O_3$ at the BRGO anode, proportional to the applied anodic current, and ii) reduction of the formed $O_3$ at subsequent cathode in the anode-cathode flow direction.

The highest reported concentration of $O_3$ formed was 3.5 mg/L at current density of 700 A/m$^2$ in saturated solution of $K_2SO_4$ (~726 mM), thus a highly conductive supporting electrolyte (> 85 mS/cm). To investigate the impact of solution conductivity on $O_3$ formation, experiments using 100 mM $KH_2PO_4$/$K_2HPO_4$ buffer (11 mS/cm) as supporting electrolyte were performed. The concentration of the formed $O_3$ in cathode-anode configuration was two-fold higher compared to low-conductivity solution, i.e., 0.7 mg/L at 300 mA of applied current. Thus, the developed graphene coated sponges used with highly conductive supporting electrolytes may find potential application for in situ electrochemical ozone production.

The measurement of the electrogenerated $H_2O_2$ was also performed using potassium titanium (IV) oxalate spectrophotometric method. Yet, no $H_2O_2$ was detected in neither anode-cathode nor cathode-anode configurations. Enhancement in cathodic production of $H_2O_2$ by the addition of graphene coating is widely reported in literature and is mainly attributed to the carbon atoms adjacent to oxygen functional groups (-COOH and C-O-C) and the ring defects along the graphene nanosheet edges being the active sites for the oxygen reduction reaction via two-electron pathway.

No detection of $H_2O_2$ may be a consequence of its rapid decomposition to short-lived hydroxyl radicals (OH•). Previous studies reported that N-doping in the graphitic structure induces both production of $H_2O_2$ and its activation to OH•. Thus, it is likely that the same occurred in the present invention. The formed OH• rapidly reacted with the trace organic contaminants, thus contributing to their degradation.

To determine the production of chlorine in the present invention, experiments were performed with 20 mM NaCl added to 10 mM $KH_2PO_4$/$K_2HPO_4$ buffer, and applied currents of 75, 150 and 300 mA. Such high concentration of Cl⁻ was intentionally selected to build up $Cl_2$, and is equivalent to the salinity of reverse osmosis (RO) brines from water reclamation plants. In spite of such high Cl⁻ concentration, the highest concentration of free chlorine measured in the cathode-anode direction was only 0.56±0.007 mg/L (FIG. 4g), whereas in the anode-cathode configuration it was somewhat lower, 0.1 ±0.02 mg/L, due to the cathodic reduction of the formed $Cl_2$. The calculated current efficiency for $Cl_2$ formation in cathode-anode direction was only 0.04%. Moreover, neither $ClO_3^-$ nor $ClO_4^-$ formation was detected in any of the conducted experiments, further demonstrating that there was very little electrochemical oxidation of chloride ions present in the system.

Example 4: Electrochemical removal of persistent organic compounds

Following the electrocatalytic impact of the electrode order placement in the flow-through reactor, electrochemical removals of model trace organic contaminants were evaluated in anode-cathode (FIG. 5a) and cathode-anode (FIG. 5b) flow directions.

All experiments were conducted in one-pass continuous mode, with a flow rate set at 5 mL/min that corresponds to a surface area-normalized permeate flux of 175 L/m$^2$h (LMH), unless otherwise specified. The flow rate was controlled using a digital gear pump (Cole-Parmer). Graphene coated sponges were wired by a stainless-steel current collector to ensure a good distribution of current. Open circuit (OC) experiments were conducted to verify the loss of target contaminants due to their adsorption onto the graphene coated sponge electrodes. Electrochemical degradation experiments were conducted in the chronopotentiometric mode using a BioLogic multi-channel potentiostat/galvanostat VMP-300 and a leak-free Ag/AgCl reference electrode (Harvard Apparatus). The applied anodic currents were 75, 150 and 300 mA. Model persistent organic pollutants were added to 10 mM phosphate buffer ($Na_2HPO_4$/$NaH_2PO_4$) at pH 7.2, with a conductivity of 1.2 mS/cm. Before each experiment, the reactor was firstly flushed with milliQ water and 10 mM phosphate buffer. To investigate the impact of chloride, experiments were performed using the same buffer (phosphate) and with the addition of 20 mM NaCl. The experiments were performed in anode-cathode and cathode-anode sequence, to investigate the impact of electrode order on the system performance. The permeate flux ($J$, L/m$^2$h, LMH) was calculated by dividing the volumetric flow rate over the projected surface area of the electrodes (17.34 cm$^2$). The removal of persistent organic contaminants was expressed using electrooxidation flux ($J_{ELOX}$, mol/m$^2$h), calculated according to the following:

$$J_{ELOX} = (C\text{-}C_0) \times J$$

Where $C$ an $C_0$ are feed and permeate concentrations of a given contaminant ($\mu$M), respectively.

The electric energy consumption ($E_c$, kWh/m$^3$) was calculated according to the following equation:

$$E_c = \frac{U \cdot I}{q \cdot \log\frac{C}{C_0}}$$

Where $q$ is the flow rate (L/h), $U$ the average cell voltage (V) and $I$ the applied current (A). Note that $\log(C/C_0) = 1$ for one order of magnitude removal, and $\log(C/C_0) < 1$ for removals lower than 90%.

The behavior of organic pollutants in the OC experiments was similar in the two configurations investigated, with effluent concentrations of TCL and DCF decreased for ~80% and 20%, respectively, due to their adsorption onto the graphene coated sponges, whereas for IPM and DTR no adsorption was observed. Almost complete removal of TCL by adsorption can be explained by its high hydrophobicity (log D=5.13) and relatively low polar surface area (PSA) of 29 $\mathring{A}^2$. Apart from TCL, 10-20% removal observed for DCF in the OC experiments indicates its partial adsorption to the graphene sponges. Although the reported $\log K_{OW}$ of DCF is 4.1, at experimental pH 7-7.2 this compound will be present in its ionized form and thus its hydrophobicity is significantly decreased. Thus, negatively charged DCF and with somewhat higher molecular PSA (49 $\mathring{A}^2$) will have a lower tendency for hydrophobic and $\pi$ interactions. IPM and DTR, being very hydrophilic compounds and with PSAs of 169 $\mathring{A}^2$ and 96 $\mathring{A}^2$, respectively, are not expected to be adsorbed onto the graphene sponges, which was evidenced by their effluent concentrations in the OC experiments equal to their feed concentrations (FIG. 5a).

When current was applied, the performance of anode-cathode configuration was clearly superior, with higher removal rates observed for all target contaminants (FIG. 5a, b). At the highest applied current of 300 mA, in anode-cathode configuration the obtained removal efficiencies of IPM, DCF, TCL, and DTR were 91±3%, 88±1%, 99±0.01%, and 84 ±2% (FIG. 5a) whereas for the cathode-anode configuration the removal efficiencies were 54.6±4%, 39.2±2%, 74.6 ±2%, and 37.9±6% (FIG. 5b), respectively. At the same applied current, the better performance of BRGO anode and NRGO cathode in anode-cathode flow direction can be explained by several factors: i) anode-cathode configuration is characterized by an enhanced production of $H_2O_2$ via cathodic reduction of $O_2$ produced at the upstream anode; and ii) enhanced activation of $O_3$ generated at the anode by $H_2O_2$ produced at the cathode. In addition, higher accumulation of bubbles was observed in cathode-anode flow direction and likely impacted the wetting of the upstream BRGO anode and decreased the interaction of trace contaminants with the anode surface.

In anode-cathode configuration, the removal of TCL (i.e., 99%) was somewhat improved relative to OC experiment (i.e., 82%). Pronounced adsorption of TCL onto the graphene sponge electrodes made it difficult to distinguish the contribution of electro degradation to its removal. Nevertheless, TCL likely reacted with the electrogenerated $O_3$ and OH• given its reported bimolecular rate constants with these oxidants. In the case of IPM, DTR, and DCF, increase in current from 75 to 150 and 300 mA resulted in a stepwise increase in their removal efficiencies (FIG. 5a). Moreover, applied anodic current was linearly correlated with the calculated electrooxidation fluxes of DTR, IPM and DCF (FIG. 5c). For example, the removal of DTR, highly polar and recalcitrant contaminant, was increased from 34±1% at 75 mA to 58±2% at 150 and 84±2% and 300 mA, respectively. Given that this compound is persistent towards $O_3$ and difficult to remove via OH• it is likely that direct electrolysis played a significant role in its electrochemical degradation. In addition, DTR is negatively charged at bulk pH 7, therefore it may have been initially electrosorbed to the BRGO anode. IPM also showed no adsorption affinity towards graphene sponges and its removal was observed only after the application of current, reaching 48±2%, 71±4% and 91±3% at 75, 150 and 300 mA, respectively. IPM was present in its uncharged form at pH 7 (pKa=11.4), thus excluding its electrosorption. Given that IPM did not exhibit any adsorption and electrosorption, its disappearance when current is applied demonstrates its exclusive removal via electrocatalytic degradation at the graphene sponge electrodes. Like DTR, this iodinated contrast agent is recalcitrant to $O_3$ but is more reactive with OH• and thus was likely removed by a combination of direct electron transfer and oxidation via OH•. Similar to IPM and DTR, increase in current was also linearly correlated with the removal of DCF (FIG. 5a, b), which based on its bimolecular rate constants with $O_3$ ($6.8 \times 10^5$ $M^{-1}s^{-1}$) and OH• ($9.3 \times 10^9$ $M^{-1}s^{-1}$) was removed via direct electron transfer and/or the electrogenerated OH•. In summary, linear increase in the removal efficiencies of contaminants with low adsorption affinity (DCF) or no adsorption affinity at all (IPM, DTR) with increasing current (FIG. 5b) suggests that these contaminants undergo electrocatalytic degradation, and in the case of DCF and DTR, possible electrosorption at the anode. We did not observe any increase in effluent concentrations above the feed concentrations after turning off the current, and thus, even if initially electrosorbed, DCF and DTR were further degraded.

The calculated electrooxidation fluxes of trace contaminants in anode-cathode configuration at 300 mA of applied current were 171.4±0. 1, 152.1±0.1, 158.08±0.04 and 144.7±0.02 $\mu mol L^{-1}m^2$ for TCL, DCF, IPM and DTR, respectively (FIG. 5c). In the case of TCL, the lower slope value for the successive increasing current, is a result of initial adsorption effect. The electric energy per order ($E_{EO}$) for the removal of target contaminants at 300 mA was 5.8±0.3 kWhm$^{-3}$ for TCL, 11.2±0.3 kWhm$^{-3}$ for IPM, 12.9±0.4 kWhm$^{-3}$ for DCF, and 15.1±0.12 kWhm$^{-3}$ for DTR .

Next, anode-cathode configuration was operated at different flow rates and at 300 mA of applied anodic current (FIG. 5d). Increasing the flow rate to 10 mL/min had a detrimental impact on the removal of trace contaminants with low adsorption affinity, with 38±1%, 52±5% and 78±6% removal obtained for DTR, IPM and DCF, respectively, whereas the removal of hydrophobic TCL was not significantly affected. Although decrease in the flow rate to 2.5 mL/min enabled higher residence time (i.e, 6.9 min), it also led to somewhat worsened removal of trace contaminants compared with the experiments at 5 mL/min. This was likely a consequence of poor evacuation of the electrogenerated $H_2$ and $O_2$ bubbles and their accumulation within the graphene sponges, which caused increased ohmic resistance, poor wetting of the electrodes and thus decreased electrode surface area available for interaction with the contaminants.

To demonstrate the beneficial effect of atomic doping of graphene, experiments were also performed with RGO sponge counter-electrodes, i.e., without the presence of B atom and with 1% N content. The removal of IPM, DTR and DCF was significantly worsened in BRGO-RGO and RGO-NRGO systems compared with the BRGO-NRGO set-up. Removal of TCL in the OC was somewhat higher when substituting BRGO and NRGO electrodes with RGO sponge, suggesting that atomic doping did not have a significant contribution to the adsorption of the target compounds, which is governed by the $\pi$ interactions as explained previously. The worsened removal of target pollutants in BRGO-RGO and RGO-NRGO configurations is in line with the expected decreased production and activation of $H_2O_2$ at RGO cathode, and decreased formation of $O_3$ at RGO anode, respectively. Thus, the postulated mechanism of electrochemical degradation of target pollutants is based on the: i) in situ generation of $O_3$ and possibly other reactive oxygen species (e.g., OH•) at the anode, ii) in situ generation of $H_2O_2$ at the cathode and its activation to OH• either using dissolved $O_3$ or NRGO cathode, and iii) direct electron transfer between the target pollutants and graphene sponge electrodes.

To allow the detection of fluoride released from the C-F bond cleavage, experiments were performed at 230 $Am^{-2}$ of the applied anodic current density and with each target PFAS separately at 2 $\mu$M initial concentration. To determine the portion of the adsorbed, electrosorbed, electrochemically degraded and volatilized PFAS, the experiments were conducted as follows. First, removal due to volatilization was determined for each PFAS by using a closed effluent reservoir container connected to the alkaline trap with 100 mM NaOH solution, as illustrated in Figure S1. The alkaline solution was subjected to target PFASs analysis, as well as adsorbable organic fluorine (AOF) analysis using a previously published method based on combustion ion chromatography (CIC). For AOF analysis, the alkaline solution was acidified with nitric acid to improve the adsorption of the organically bound fluor to the activated carbon columns. Next, effluent samples were collected as cumulative fractions in the experimental runs consisting of $OC_0$ - 230 $Am^{-2}$ - $OC_{final}$ sequences, to measure the entire amount of the target PFAS remaining in the effluent, as well as AOF representing target PFAS and any partially fluorinated byproducts present in the effluent. To determine the amount of the fluoride released from the PFASs, three different approaches were employed: i) analysis of the fluoride present in the reactor effluent using ion chromatography (IC), ii) washing of the employed BRGO sponge with 100 mM NaOH to release any electrosorbed fluoride via ion exchange, and analysis of the washing solution using a fluoride probe (Orion Star, Thermo Scientific) iii) CIC analysis of the BRGO anode, as described further in the text. In addition, to detect fluoride released from PFASs and bound in the graphene coating via X-ray photoelectron spectroscopy (XPS) analysis, long-term electrochemical degradation experiment (i.e., 800 bed volumes) was conducted at a high initial PFASs concentration (2 $\mu$M) and at 230 $Am^{-2}$, to increase the presence of bound F in the BRGO anode. Prior to the analysis of fluoride bound in the coating, the employed BRGO anode was thoroughly washed with MilliQ water and a 100 mM NaOH solution to remove any adsorbed fluorinated organics.

CIC of the fluoride incorporated into the BRGO anode coating was conducted as follows. Freshly synthesized BRGO sponge anode was employed for electrochemical degradation of each PFAS separately. The used BRGO anode was analyzed using CIC in a similar manner to the analysis of loaded activated carbon cartridges employed in the AOF analysis, i.e., by combusting the sponge at 1000°C, trapping the fluorine gas released from the sponge in the absorbent solution, and quantifying it as fluoride using IC. This analysis was performed after each experiment with single PFASs and using a newly synthesized graphene sponge for each run. As previously mentioned, to ensure that the measured fluoride represents fluoride incorporated into the graphene coating and not fluoride originating from the adsorbed PFAS or their byproducts, the sponges were thoroughly washed with MilliQ water and 100 mM NaOH solution. The washing solution was then analyzed for the presence of PFAS as well as for AOF. Finally, to determine the release of sulfate from the PFSAs, the reactor was operated with the polarity switch conducted after the experimental run with the target PFSAs. The BRGO anode was polarized to -1 V/SHE, and the retained sulfate was recovered as a concentrated aqueous solution. All experiments were conducted at least in duplicate, and the results are expressed as mean with their standard deviations (SDs).

To verify the stability of the graphene-based sponges, the reactor was operated at the highest applied current (230 $Am^{-2}$) and electrochemically treated samples were analysed for the presence of GO and RGO by measuring the absorbance at wavelengths of 231 nm and 270 nm using UV-Vis diode array spectrophotometer (Agilent 202 Technologies).

Example 5: Electrosorption and electrochemical removal of per- and polyfluoroalkyl substances

In the same line as example 4, electrochemical removal of PFASs was evaluated in the flow-through reactor at different current densities for a single model perfluoroalkyl compound, PFOS (FIG. 6), and for a mix of six model perfluoroalkyl compounds, PFBA, PFBS, PFHxA, PFHxS, PFOA and PFOS (FIG. 7).

All experiments were conducted as mentioned above, in one-pass continuous mode in anode-cathode sequence, with a flow rate set at 5 mL/min that corresponds to a surface area-normalized permeate flux of 175 $L/m^2h$ (LMH). In the experiments with single compound solution of PFOS, the contaminant was added to tap water (pH 7.6-7.8, conductivity 0.4 mS/cm) at the initial concentration of 2 $\mu$M, and the anodic currents applied were 50, 100 and 150 mA. The obtained removal efficiencies of PFOS at applied currents of 50, 100 and 150 mA, were respectively 34$\pm$9%, 38$\pm$6% and

$60\pm5\%$ (FIG. 6). In the experiment with a mixture of six PFASs, model contaminants were added to 10 mM phosphate buffer ($Na_2HPO_4/NaH_2PO_4$, pH 7.2, 1.2 mS/cm) and the anodic currents applied were 100 and 200 mA. The obtained removal efficiencies of six PFASs were 46.8% (PFOA), 38.7% (PFOS), 26.8% (PFHxA), 37.8% (PFHxS), 5.8% (PFBA) and 8.5% (PFBS) for 100 mA, and 67.8%, 72.5%, 48.1%, 70.8%, 25.8% and 29.1% at 200 mA, respectively.

To determine the portions of volatilized, electrosorbed, and degrade PFASs, as well as the efficiencies of the C-F bond cleavage and desulfonation, the experiments were conducted using single solutions of PFASs at 2 $\mu$M initial concentration and anodic current density of 230 $Am^{-2}$, resulting in the ohmic-drop corrected anode potential of 7.6 V/SHE. The alkaline trap employed in the preliminary experiments to evaluate the % of PFAS volatilization did not contain any of the target PFASs, and the adsorbable organic fluoride (AOF) values were below the detection limit (i.e., 0.5 $\mu gL^{-1}$), implying that there was no volatilization of the target PFASs or their byproducts from the reactor. The amount of the electrosorbed PFASs was calculated based on their concentrations measured in the cumulative fractions sampled in the $OC_{final}$. The % of the electrooxidation of the target PFAS was calculated by subtracting the amount of the PFAS recovered during the $OC_{final}$ (i.e., corresponding only to the electrosorbed PFAS) from the total amount removed during current application, and dividing it with the latter. The total removal efficiencies presented as removal % due to electrosorption, and removal % achieved by electrooxidation are presented in Figure 2A. As expected, the longer chain PFASs demonstrate the highest electrooxidation efficiency of $32\pm4.3\%$ and $31.5\pm9.9\%$ for PFOS and PFOA, respectively. Electrosorbed (but not degraded) fraction of PFOS was significantly higher ($35\pm8.3\%$ removal due to electrosorption) compared with the PFOA ($12.1\pm6.5\%$ removal), as expected based on their predicted molecular polarizabilities. The percentages of electrosorption as well as electrooxidation further decrease progressively in the order C8>C6>C4 for both PFSAs and PFCAs, with the overall lower removal % observed in the latter case (Figure 2A). For the shorter-chain PFSAs, removal due to electrooxidation was $15.3\pm6.1\%$ (PFHxS), $10.2\pm5.9\%$ (PFHxA), $13.7\pm1.5\%$ (PFBS), and $9.3\pm1.7\%$ (PFBA). Removal due to electrosorption only was calculated to be $35\pm8.3\%$ (PFOS), $12.6\pm6.5\%$ (PFOA), $16\pm3.2\%$ (PFHxS), $13.3\pm3.8\%$ (PFHxA), $13\pm2.6\%$ (PFBS) and $7.4\pm0.5\%$ (PFBA). The observed electrosorption of PFASs without their further electrooxidation is likely a consequence of the low supporting electrolyte conductivity that limits the electrocatalytic activity of the electrode.

Analysis of sulfate in the reactor effluent did not show any release of sulfate during the application of current. However, sulfate was detected in the reactor effluent after switching off the current, although in the amounts lower than expected based on the obtained electrooxidation % (Figure 2B). To evaluate the desulfonation % of the target PFSAs, separate experiments were conducted with the BRGO anode employed for PFSAs degradation polarized after each experiment to -1 V/SHE to desorb the retained $SO_4^{2-}$. The % of desulfonation was calculated based on the total sulfate measured, and the amount of the theoretically expected sulfate was calculated from the electrooxidation removal % (Text S5). The recoveries of $SO_4^{2-}$ obtained for PFOS, PFHxS and PFBS were 91%, 98% and 95%, respectively. Thus, nearly stoichiometric sulfate recovery demonstrated that electrooxidized PFSAs underwent cleavage of the sulfonate head-group. The desulfonation was $29.1\pm4.8\%$ (PFOS), $15.1\pm6.3\%$ (PFHxS) and $13.0\pm0.3\%$ (PFBS) (Figure 2B), calculated considering the initial concentration of the target PFASs. The incomplete mass balance for sulfate in the case of PFOS could be attributed to recombination of the cleaved $SO_4^{2-}$ with $C_nF_{2n-1}{}^{\bullet}$ radicals.

The initial release of sulfate was previously reported for electrooxidation of PFASs and is achieved in the first electron transfer step to the anode followed by a Kolbe desulfonation to produce $C_nF_{2n-1}{}^{\bullet}$:

$$C_nF_{2n+1}SO_3^- \rightarrow C_nF_{2n+1}SO_3 \cdot + e^-$$

$$C_nF_{2n+1}SO_3 \cdot + H_2O \rightarrow C_nF_{2n+1} \cdot + SO_4^{2-} + 2H^+$$

Analogous electron transfer reaction occurs for PFCAs followed by a Kolbe decarboxylation:

$$C_nF_{2n+1}COO^- \rightarrow C_nF_{2n+1}COO \cdot + e^-$$

$$C_nF_{2n+1}COO \bullet \rightarrow C_nF_{2n+1} \bullet + CO_2$$

According to the DFT simulations, the formed $C_nF_{2n+1}{}^{\bullet}$ radical reacts further with $OH\bullet$, $O_2$, and $H_2O$ and undergoes $CF_2$ unzipping reaction mechanism to form HF, $CO_2$, and defluorinated byproducts, with the initial direct electron transfer being the rate-limiting step. This mechanism was supported by the DFT simulations and experimental evidence that shows limited reactivity of PFASs to hydroxyl radical ($\bullet$OH) attack.

$$C_nF_{2n+1} \bullet + HO \bullet \rightarrow C_nF_{2n+1}OH$$

$$C_nF_{2n+1}OH \rightarrow C_nF_{2n-1}OF + HF$$

$$C_nF_{2n-1}OF + H_2O \rightarrow C_{n-1}F_{2(n-1)+1}COO^- + HF + H^+$$

Fluoride released from the C-F bond cleavage could not be detected in the effluent samples during current application, in the $OC_{final}$, nor with the polarity reversal employed to recover the released sulfate. Previous studies indicated that fluorine or fluorine-containing species can remain present at the anode surface. An attempt to recover fluoride from the BRGO anode employed for the PFAS degradation by washing of the sponge with 100 mM NaOH solution did not result in the fluoride recovery via ion exchange. Furthermore, there was no AOF of PFASs measured in the washing solution, confirming that the sponge did not adsorb the target PFASs or any byproducts of their electrooxidation, in accordance with the data obtained in the $OC_0$ runs. Given that the HF released during PFAS defluorination is a highly reactive species, fluoride was incorporated into the graphene coating of the BRGO anode. For example, HF is used for the synthesis of fluorinated graphene for optoelectronics and photonics applications and results in the formation of covalent C-F bonds with graphene. XPS analysis of the BRGO anode used in a long-term experiment (800 bed volumes) at a high initial PFASs concentration (2 $\mu$M) did not allow the detection of fluoride, likely due to the very low relative % of the incorporated F. Nevertheless, fluoride incorporated into the BRGO anode could be detected using a CIC method. The BRGO anodes employed for the degradation of single PFAS solutions were subjected to CIC analyses, and the F-concentrations obtained in the combustion of each sponge were used to calculate the fluoride recoveries for each PFASs. The % of fluoride recovered from the amount of the electrooxidized PFASs were 75.3% (PFOS), 74.1% (PFOA), 81.1% (PFHxS), 83.3% (PFHxA), 85% (PFBS) and 87.1% (PFBA). Relative to the overall removal of PFASs, the overall defluorination ratios ranged from 23.0±3.7% (PFOS), 21.8±7.5% (PFOA), 12.5±5.6% (PFHxS), 8.5±4.9% (PFHxA), 11.7±1.3% (PFBS) to 8.1±1.5% (PFBA). More efficient overall C-F bond breakage for longer-chain PFOS and PFOA is in accordance with the previous studies. However, this is likely another consequence of their more pronounced interaction with the graphene-based sponge anode surface compared with the shorter-chain PFASs, as the amount of the recovered fluoride relative to the amount of the electrooxidized compound did not exhibit the same decreasing tendency with the chain shortening, and was in the range of 74-87%, as explained above. The recovery of the bound fluoride from the BRGO sponge evidences the capability of the BRGO anode to cleave the C-F bond in both long-chain (C8) as well as short-chain (C4) PFASs. Although the observed defluorination % were low due to a significant portion of the target PFASs only undergoing electrosorption (i.e., without further degradation), it is important to note that: i) these results were obtained in a low conductivity solution (1 $mScm^{-1}$), and ii) graphene sponge electrode is capable of electrochemical defluorination of PFASs without producing chlorine, chlorate, or perchlorate, making it a unique anode material. Graphene-based sponge anodes can be employed for the treatment of highly saline, more conductive streams rich in PFASs (e.g., reverse osmosis (RO) concentrate, landfill leachate) as even the presence of high chloride concentrations will not compromise the quality of the treated water due to its electrooxidation. Thus, the increase in the effluent toxicity typically observed in the electrooxidation of highly saline streams can be completely avoided.

Fluorine modifies the electronic properties of graphene oxide by introducing scattering centres, widening the band gaps and reducing the charge in the conducting $\pi$ orbitals. Fully fluorinated graphene oxide exhibits a reduction of electric conductivity. However, the incorporation of fluoride into the BRGO anode did not change its electrochemical activity towards PFASs removal during the previously described long-term experiment (i.e., 800 bed volumes) at high PFASs concentration (mixed solution of six target PFASs at $C_0$=2 $\mu$M). Moreover, the bound F was present in traces in the graphene coating as it was not detectable in the XPS analyses and could only be determined by the complete combustion of the sponge and CIC analyses. The incorporation of fluoride when treating real contaminated water containing orders of magnitude lower concentrations of PFASs would likely have an impact on the anode composition and performance only after long periods of usage. For example, the expected PFASs concentrations in the RO brine and landfill leachate are between 2 nM (Thompson et al., 2011) and 0.026-0.15 $\mu$M. If the graphene sponge anode performance becomes limited by the fluoride incorporation from PFASs degradation, the electrode can be easily replaced with a new graphene sponge considering its extremely low cost (€46 per $m^2$ of the projected surface area).

Given that not all fluoride could be recovered relative to the amount of the electrooxidized PFAS (i.e., 74-87% defluorination relative to the electrooxidized compound, Figure 2C), their electrochemical defluorination was incomplete. To estimate the amount of the formed partially defluorinated byproducts, AOF of the cumulative effluent samples was measured during the chronopotentiometric run at 230 $Am^{-2}$ and in $OC_{final}$, and the total amounts determined are presented in Figure 3. The measured AOF values are expressed in quantity of $F^-$ and presented versus the amount of the AOF expected based on the measured concentrations of each PFASs.

During the application of current, the measured effluent AOF is comparable to the AOF expected from the remaining amount of the parent compound in the case of all six PFASs, indicating that the measured organically bound fluorine can be completely assigned to the parent compound. However, significant differences between the measured and expected AOF can be observed after the current is switched off, in the OCfinal. For PFOS, the cumulative organic fluorine in the OCfinal expected from the PFOS measured in the effluent was 173.5 $\mu$g $F^-$, while the AOF analysis detected a total of 324.5 $\mu$g $F^-$. This higher measured AOF than expected AOF indicates the presence of an organic source of fluorine different from the parent compound. Similar to the desorption of the target PFASs from the BRGO anode in the OCfinal, any partially defluorinated byproducts underwent the same process, being strongly electrosorbed during the application of current, and released after the current was switched off. Thus, their accumulation at the anode during current application and simultaneous release in OCfinal leads to AOF values higher than expected based on the effluent concentrations of the parent compound. It should be noted here that the AOF is a semi-quantitative, bulk measurement because it is not possible to determine the exact extraction recoveries of the unknown fluorinated byproducts formed in electrooxidation of PFASs. Based on the defluorination % obtained relative to their overall % of electrochemical degradation, the AOF likely corresponds to short-chain, partially defluorinated byproducts. Moreover, it is likely that the measured AOF in the OCfinal overestimates the amount of the present short-chain, partially fluorinated degradation products considering that the recoveries of the AOF analyses of the target PFASs increase with fluorinated chain shortening, in the order PFOS<PFHxS<PFBS, and PFOA<PFHxA<PFBA. The detection of the organically bound fluorine different from the parent PFASs after switching off the current further demonstrates their partial defluorination and is in accordance with the observed incomplete fluoride recoveries from the anode.

Example 6: Analytical methods

Target organic contaminants were analyzed with a 5500 QTRAP hybrid triple quadrupole-linear ion trap mass spectrometer with a turbo Ion Spray source (Applied Biosystems), coupled to a Waters Acquity Ultra-Performance™ liquid chromatograph (Milford).

IPM and DTR were analyzed in electrospray (ESI) positive mode using an Acquity ultraperformance liquid chromatography (UPLC) HSS T3 column (2.1x50 mm, 1.8 um, Waters) run at 30°C. The eluents employed were acetonitrile with 0.1% formic acid (eluent A) and milli-Q (LC-MS grade) water with 0.1% formic acid (eluent B) at a flow rate of 0.5 mL/min. The gradient was started at 2% of eluent A that was increased to 20% a by 3 min, further increase to 50% A by 6 min and further increased to 95% a by 7 min. It was kept constant for 2.5 min, before returning to the initial condition of 2% A by 9.5 min. The total run time was 11 min.

TCL and DCF were analyzed in the ESI negative mode using an Acquity UPLC© BEH C18 column (2.1x50 mm, 1.7 um, Waters) run at 30°C. The eluents for ESI negative mode were milli-Q (LC-MS grade) water containing a mixture of acetonitrile and methanol (1:1 v/v) (eluent A) and 1 mM ammonium acetate (eluent B) at a flow rate of 0.6 mL/min. The gradient was started at 5% A, further increased to 100% A by 7 min and then kept constant for 2 min, before returning to the initial conditions of 5% A by 9 min. The total run time in the ESI negative mode was 10 min.

The target organic contaminants were analyzed in a multiple reaction monitoring (MRM) according to the previously published methods. Free and total chlorine were measured with Chlorine/Ozone/Chlorine dioxide cuvette tests LCK 310 (Hach Lange Spain SL) immediately after sampling. Chloride and perchlorate were measured by high-pressure ion chromatography (HPIC) using a Dionex ICS-5000 HPIC system. Fluoride in highly alkaline solutions (i.e., 100 mM NaOH) was analyzed using a selective fluoride probe (Orion Star, Thermo Scientific). Determination of AOF in the aqueous samples was performed with an AQF-2100H Automatic Quick Furnace for CIC (Mitsubishi Chemical Analytech), coupled to IC (ICS-2100, Dionex). Determination of fluoride incorporated in the graphene sponge anode was performed by combusting the used graphene sponge using the same CIC-IC method and measuring the amount of the released fluoride. Previous study revealed the potential presence of fluorine in inorganic thermal insulation materials such as mineral wool template employed in the graphene sponge synthesis. Thus, CIC method was employed to determine the fluoride in the mass of mineral wool template (i.e., 49 $\mu$g) employed in the graphene-based sponge synthesis. The amount of the fluoride incorporated into the BRGO anode due to PFAS degradation was obtained by subtracting the fluoride released from the mineral wool from the amount detected after combusting the graphene sponge used for electrochemical degradation of a specific PFAS. XPS measurements were done with a Phoibos 150 analyzer (SPECS GmbH, Berlin, Germany) in ultra-high vacuum conditions (base pressure 1-10 mbar) with a monochromatic aluminium Kalpha x-ray source (1486.74 eV). The energy resolution as measured by the FWHM of the Ag 3d5/2 peak for a sputtered silver foil was 0.58 eV.

**Claims**

1. A method to prepare a graphene coated sponge-based electrode comprising:

   - obtaining a graphene coated sponge by:

     filling mineral wool with a solution comprising graphene material by successive squeezing to obtain a mineral wool soaked with graphene material;
     transferring the mineral wool soaked with graphene material into a hydrothermal reactor and submitting it to heating from 60 to 240 ºC for 5 minutes to 72 hours to have graphene material bonded to mineral wool;
     cleaning the heated material to remove the unbonded graphene material and reaction by-products from the graphene coated mineral wool; and

- connecting the graphene coated sponge to electrical current.

2. The method according to claim 1, wherein the graphene material is graphene oxide.

3. The method according to any one of claims 1 or 2, wherein the heated material is cleaned in a water-based bath or in a flow-through reactor.

4. The method according to any one of claims 1 to 3, wherein the solution comprising graphene material further includes a dopant, preferably selected from the group of boric acid, urea, metal precursors and 2D materials.

5. The method according to claim 4, wherein the metal precursors are selected from the group consisting of tin chloride (II), iron chloride (II), titanium chloride (IV) and mixtures thereof.

6. The method according to any one of claims 4 or 5, wherein the 2D materials are selected from the group consisting of hexagonal boron nitride, phosphorene, borophene, graphydine, molybdenum disulfide, and mixtures thereof.

7. The method according to any one of claims 1 to 6, wherein the solution comprises graphene material in a concentration between 0.001 and 10 g/L of graphene material per liquid base.

8. The method according to any one of claims 3 to 7, wherein the heated material is cleaned in a water-based bath for a time between 1 minute and 72 hours at a temperature from 30 to 200$\underline{o}$C.

9. The method according to any one of claims 1 to 8, wherein metallic current feeders are configured to connect the graphene coated sponge to the electrical current.

10. The method according to claim 9, wherein the metallic current feeders are selected from the group comprising stainless steel, titanium, niobium or tantalum.

11. A graphene coated sponge-based electrode obtained by the method according to any one of claims 1 to 10.

12. An electrochemical flow-through reactor comprising at least an anode and a cathode wherein at least one of the electrodes is the graphene coated sponge-based electrode according to claim 11.

13. A method of treating water comprising
passing the water through the electrochemical flow-through reactor according to claim 12.

14. The method according to claim 13, wherein the water presents a conductivity of 0.4 mS/cm or more.

15. Use of the electrode according to claim 11 as a water-treating agent.

**Patentansprüche**

1. Verfahren zur Herstellung einer graphenbeschichteten Elektrode auf Schwammbasis, umfassend:

- Erhalten eines graphenbeschichteten Schwamms durch:

Füllen von Mineralwolle mit einer Lösung, umfassend Graphenmaterial, durch aufeinanderfolgendes Auspressen, um eine mit Graphenmaterial getränkte Mineralwolle zu erhalten;
Überführen der mit Graphenmaterial getränkten Mineralwolle in einen hydrothermalen Reaktor und Unterziehen derselben einem Erhitzen von 60 bis 240 °C für 5 Minuten bis 72 Stunden, um Graphenmaterial an Mineralwolle zu binden;
Reinigen des erhitzten Materials, um das nicht gebundene Graphenmaterial und Reaktionsnebenprodukte von der graphenbeschichteten Mineralwolle zu entfernen; und

- Anschließen des graphenbeschichteten Schwamms an elektrischen Strom.

2. Verfahren nach Anspruch 1, wobei das Graphenmaterial Graphenoxid ist.

3. Verfahren nach einem der Ansprüche 1 oder 2, wobei das erhitzte Material in einem wasserbasierten Bad oder in einem Durchflussreaktor gereinigt wird.

4. Verfahren nach einem der Ansprüche 1 bis 3, wobei die Graphenmaterial umfassende Lösung ferner ein Dotiermittel beinhaltet, das vorzugsweise aus der Gruppe Borsäure, Harnstoff, Metallvorläufern und 2D-Materialien ausgewählt ist.

5. Verfahren nach Anspruch 4, wobei die Metallvorläufer aus der Gruppe bestehend aus Zinn(II)-chlorid, Eisen(II)-chlorid, Titan(IV)-chlorid und Gemischen davon ausgewählt sind.

6. Verfahren nach einem der Ansprüche 4 oder 5, wobei die 2D-Materialien aus der Gruppe bestehend aus hexagonalem Bornitrid, Phosphoren, Borophen, Graphydin, Molybdändisulfid und Gemischen davon ausgewählt sind.

7. Verfahren nach einem der Ansprüche 1 bis 6, wobei die Lösung Graphenmaterial in einer Konzentration zwischen 0,001 und 10 g/l Graphenmaterial pro Flüssigkeitsbasis umfasst.

8. Verfahren nach einem der Ansprüche 3 bis 7, wobei das erhitzte Material in einem wasserbasierten Bad für eine Zeit zwischen 1 Minute und 72 Stunden bei einer Temperatur von 30 bis 200 °C gereinigt wird.

9. Verfahren nach einem der Ansprüche 1 bis 8, wobei metallische Stromzuführungen dazu konfiguriert sind, den graphenbeschichteten Schwamm an den elektrischen Strom anzuschließen.

10. Verfahren nach Anspruch 9, wobei die metallischen Stromzuführungen aus der Gruppe umfassend Edelstahl, Titan, Niob oder Tantal ausgewählt sind.

11. Graphenbeschichtete Elektrode auf Schwammbasis, erhalten durch das Verfahren nach einem der Ansprüche 1 bis 10.

12. Elektrochemischer Durchflussreaktor, umfassend mindestens eine Anode und eine Kathode, wobei mindestens eine der Elektroden die graphenbeschichtete Elektrode auf Schwammbasis nach Anspruch 11 ist.

13. Verfahren zur Wasseraufbereitung, umfassend
Leiten des Wassers durch den elektrochemischen Durchflussreaktor nach Anspruch 12.

14. Verfahren nach Anspruch 13, wobei das Wasser eine Leitfähigkeit von 0,4 mS/cm oder mehr aufweist.

15. Verwendung der Elektrode nach Anspruch 11 als Wasseraufbereitungsmittel.


**Revendications**

1. Procédé de préparation d'une électrode à base d'éponges revêtues de graphène comprenant :

   - l'obtention d'une éponge revêtue de graphène par :

      le remplissage de laine minérale avec une solution comprenant un matériau de graphène par pressage successif pour obtenir une laine minérale imprégnée de matériau de graphène ;
      le transfert de la laine minérale imprégnée du matériau de graphène dans un réacteur hydrothermique et la soumission de celui-ci à un chauffage de 60 jusqu'à 240°C pendant de 5 minutes à 72 heures de façon à obtenir un matériau de graphène lié à de la laine minérale ;
      le nettoyage du matériau chauffé pour éliminer le matériau de graphène non lie et les sous-produits de réaction de la laine minérale revêtue de graphène ; et

   - la connexion de l'éponge revêtue de graphène à un courant électrique.

2. Procédé selon la revendication 1, dans lequel the matériau de graphène est de l'oxyde de graphène.

**3.** Procédé selon l'une quelconque des revendications 1 ou 2, dans lequel le matériau chauffé est nettoyé dans un bain à base d'eau ou dans un réacteur à flux continu.

**4.** Procédé selon l'une quelconque des revendications 1 à 3, dans lequel la solution comprenant le matériau de graphène comporte en outre un dopant, de préférence choisi parmi le groupe de l'acide borique, l'urée, des précurseurs métalliques et des matériaux en 2D.

**5.** Procédé selon la revendication 4, dans lequel les précurseurs métalliques sont choisis parmi le groupe constitué par le chlorure d'étain (II), le chlorure de fer (II), le chlorure de titane (IV) et des mélanges de ceux-ci.

**6.** Procédé selon l'une quelconque des revendications 4 ou 5, dans lequel les matériaux en 2D sont choisis parmi le groupe constitué par le nitrure de bore hexagonal, le phosphorène, le borophène, le graphdiyne, le disulfure de molybdène et les mélanges de ceux-ci.

**7.** Procédé selon l'une quelconque des revendications 1 à 6, dans lequel la solution comprend du matériau de graphène dans une concentration comprise entre 0,001 et 10 g/l de matériau de graphène per base liquide.

**8.** Procédé selon l'une quelconque des revendications 3 à 7, dans lequel le matériau chauffé est nettoyé dans un bain à base d'eau pendant une durée comprise entre 1 minute et 72 heures à une température de 30 jusqu'à 200°C.

**9.** Procédé selon l'une quelconque des revendications 1 à 8, dans lequel des dispositifs d'alimentation en courant métalliques sont configurés pour connecter l'éponge revêtue de graphène au courant électrique.

**10.** Procédé selon la revendication 9, dans lequel les dispositifs d'alimentation en courant métalliques sont choisis parmi le groupe comprenant l'acier inoxydable, le titane, le niobium ou le tantale.

**11.** Électrode à base d'éponges revêtues de graphène obtenu par le procédé selon l'une quelconque des revendications 1 à 10.

**12.** Réacteur à flux continu électrochimique comprenant au moins une anode et une cathode, dans lequel au moins l'un des électrodes est l'électrode à base d'éponges revêtues de graphène selon la revendication 11.

**13.** Procédé de traitement de l'eau comprenant
le passage de l'eau à travers le réacteur à flux continu électrochimique selon la revendication 12.

**14.** Procédé selon la revendication 13, dans lequel l'eau présente une conductivité de 0,4 mS/cm ou plus.

**15.** Utilisation de l'électrode selon la revendication 11 comme agent de traitement de l'eau.

FIG. 1

FIG. 2

FIG. 3

FIG.4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130230709 A1
- US 20160257569 A1
- US 9499410 B2
- CN 108947275
- CN 108924974
- WO 2019238119 A1

**Non-patent literature cited in the description**

- **GE, J. et al.** Joule-heated graphene-wrapped sponge enables fast clean-up of viscous crude-oil spill. *Nature Nanotechnology*, 2017, vol. 12, 434-440
- **ZHANG Y. F. et al.** Adsorption of Dye in Media Industry Pollution with Glass Wool Modified by Graphite Oxide. *Applied Mechanics and Materials*, 2013, vol. 448 (453), 119-122